# EUROPEAN PATENT APPLICATION

(11) **EP 3 354 913 A1**
(43) Date of publication of application: **01.08.2018**
(21) Application number: 18152239.2
(22) Date of filing: 18.01.2018
(51) Int. Cl.: F16B 25/00, F16B 25/10

(54) **STRUCTURE OF SELF-DRILLING SCREW**

(30) Priority: 25.01.2017 TW 106102433
(71) Applicant: Chao, Ying-Chin, Kaohsiung City (TW)
(72) Inventor: Chao, Ying-Chin, Kaohsiung City (TW)
(74) Representative: Horak, Michael

(57) **Abstract**

A structure of a self-drilling screw is disclosed. The screw includes a screw head (21) and a shank (22) extending downward from the screw head (21). The shank (22) has an outer circumferential surface, around which a thread (23) is circumferentially formed. The shank (22) has a lower end forming a drilling tip section (24). The thread (23) is extended or not extended into the drilling tip section (24). The drilling tip section (24) is formed with at least one first chip removal groove (25). The first chip removal groove (25) has an upper end and at least one second chip removal groove (26) is arranged to extend from the upper end along the shank (22) in a direction toward the screw head (21).

## Description

### (a) Technical Field of the Invention

The present invention relates generally to a structure of self-drilling screw, and more particularly to a self-drilling screw structure that improves the capability of the screw for chip removal in operations of cutting, tapping, and drilling into a depth and also helps reduces a torque of the screw during screwing in to thereby achieve effects of saving labor and time in conducting an operation and thus enhance quality of operation conducted with the screw.

### (b) Description of the Prior Art

A self-drilling screw is generally used to provide connection between metallic workpiece, wooden workpiece, or metal and wooden workpieces so that workpieces can be fast fastened together by means of the capability of drilling and taping of the screw.

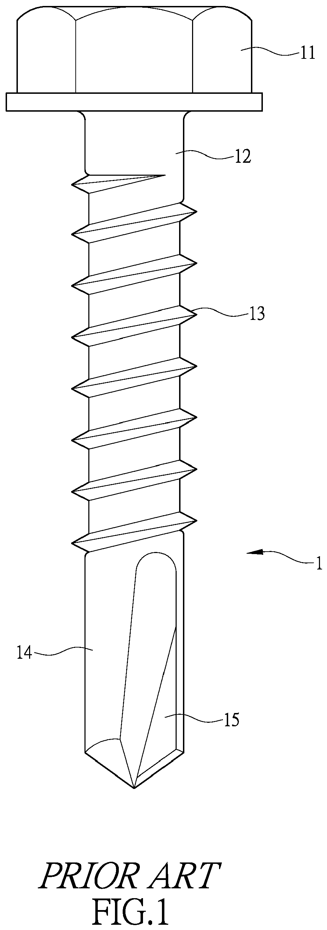

As shown in FIG. 1, a screw 1 comprises a screw head 11 and a shank 12 extending downward from the screw head 11. The shank 12 has a circumferential surface that is formed with a thread 13 helically extending around the shank. The shank 12 has a lower end that is formed as a drilling tip 14. To improve the performance of cutting and chip removal of the screw 1, the drilling tip 14 is provided with a chip removal groove 15. The chip removal groove 15 is arranged to improve the performance of cutting and chip removal of the screw 1.

Although such a known screw 1 is effective in improving the performance of drilling and cutting of the screw 1, the chip removal groove 15 is provided only in the drilling tip 14. This cause undesired limitation to the performance of cutting and chip removal of the screw 1. Thus, it is a challenge of the screw manufacturers to provide a structure of a self-drilling screw that ensures desired performance of cutting and chip removal during an operation of drilling, cutting, and screwing in of the screw 1 and also helps reduce frictional torque generated during an operation of screwing and smoothen removal of chips.

### SUMMARY OF THE INVENTION

The primary objective of the present invention is to overcome the drawback of the conventional self-drilling screw that a chip removal groove is provided only in a drilling tip thereof so as to impose severe limitations to an operation of the screw of cutting, tapping, and drilling into a depth and removal of chips.

The technical solution adopted in the present invention to achieve the above objective comprises a structure of a self-drilling screw. The screw comprises a screw head and a shank extending downward from the screw head. The shank has an outer circumferential surface, around which a thread is circumferentially formed. The shank has a lower end forming a drilling tip section. The thread is extended or not extended into the drilling tip section. The drilling tip section is formed with at least one first chip removal groove. The first chip removal groove has an upper end and at least one second chip removal groove is arranged to extend from the upper end along the shank in a direction toward the screw head.

The efficacy of the present invention that is achieved with the above technical solution is that by arranging at least one second chip removal groove on a shank of a screw with the second chip removal groove being connected to or not connected to a first chip removal groove provided on a drilling tip section, the capability of the screw for cutting, tapping, or drilling into a depth and the performance of chip removal thereof can be improved, and also a screw-in torque of the screw can be reduced, to thereby achieve an effect of saving labor and time and thus improve the quality of operation conducted with the screw.

The foregoing objectives and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

FIG. 1 is a schematic view showing a conventional self-drilling screw.
FIG. 2 is a schematic view showing a self-drilling screw according to the present invention.
FIG. 3 shows a second embodiment of the self-drilling screw of the present invention.
FIG. 4 shows a third embodiment of the self-drilling screw of the present invention.
FIG. 5 shows a fourth embodiment of the self-drilling screw of the present invention.
FIG. 6 shows a fifth embodiment of the self-drilling screw of the present invention.
FIG. 7 shows a sixth embodiment of the self-drilling screw of the present invention.
FIG. 8 shows a seventh embodiment of the self-drilling screw of the present invention.
FIG. 9 shows an eighth embodiment of the self-drilling screw of the present invention.

### DETAILED DESCRIPTION OF THE PREFERRED EMBODIMENTS

The following descriptions are exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

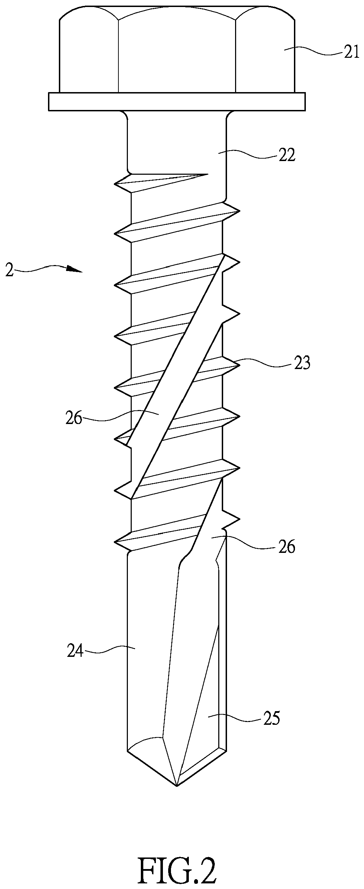

As shown in FIG. 2, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end and arranged to extend upward from the upper end along the shank 22 in a direction toward the screw head 21 is at least one helical second chip removal groove 26. The helical direction of the second chip removal groove 26 is the same as an angular direction of the thread 23. The second chip removal groove 26 is connected to and in communication with the first chip removal groove 25 of the drilling tip section 24. More specifically, a location of connection and communication between the first chip removal groove 25 and the second chip removal groove 26 can be selected according to the need of a user or a customer and can be set at an upper end, a middle section, or a lower end of the drilling tip section 24. FIG. 2 provides an example in which the connection and communication is made at the upper end. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2, to thereby achieve an effect of saving labor and time and thus improve the quality of operation conducted with the screw 2.

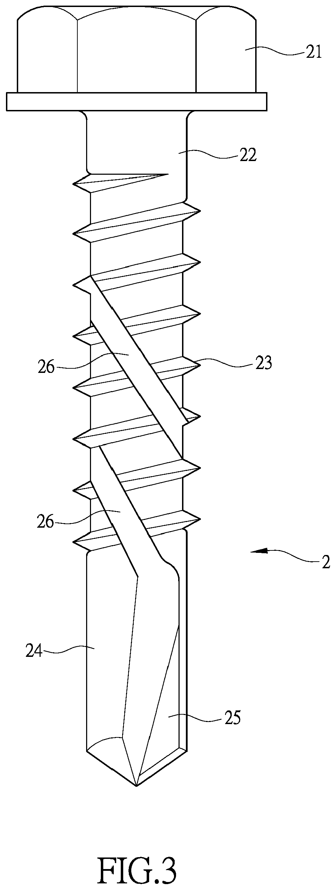

As shown in FIG. 3, a screw 2 comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end and arranged to extend upward from the upper end along the shank 22 in a direction toward the screw head 21 is at least one helical second chip removal groove 26. The helical direction of the second chip removal groove 26 is opposite to an angular direction of the thread 23. The second chip removal groove 26 is connected to and in communication with the first chip removal groove 25 of the drilling tip section 24. More specifically, a location of connection and communication between the first chip removal groove 25 and the second chip removal groove 26 can be selected according to the need of a user or a customer and can be set at an upper end, a middle section, or a lower end of the drilling tip section 24. FIG. 3 provides an example in which the connection and communication is made at the upper end. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect saving labor and time.

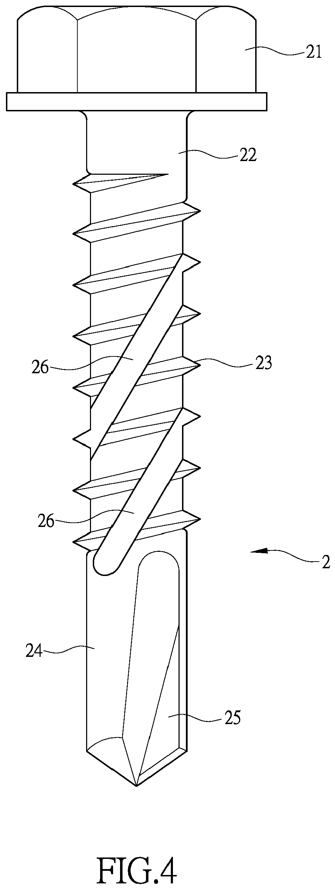

As shown in FIG. 4, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end and arranged to extend upward from the upper end along the shank 22 in a direction toward the screw head 21 is at least one helical second chip removal groove 26. The helical direction of the second chip removal groove 26 is the same as an angular direction of the thread 23. The second chip removal groove 26 is not connected to the first chip removal groove 25 of the drilling tip section 24. According to the need of customers, the second chip removal groove 26 may be structured to have a starting point that is located in the drilling tip section 24 or the thread 23. FIG. 4 provides an example in which the starting point is set at the drilling tip section 24. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

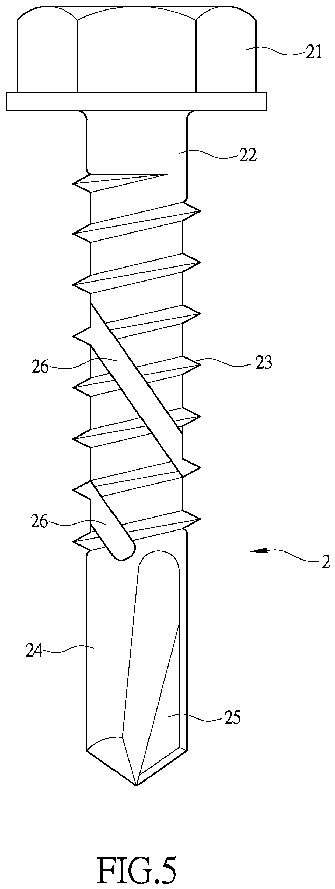

As shown in FIG. 5, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end and arranged to extend upward from the upper end along the shank 22 in a direction toward the screw head 21 is at least one helical second chip removal groove 26. The helical direction of the second chip removal groove 26 is opposite to an angular direction of the thread 23. The second chip removal groove 26 is not connected to the first chip removal groove 25 of the drilling tip section 24. According to the need of customers, the second chip removal groove 26 may be structured to have a starting point that is located in the drilling tip section 24 or the thread 23. FIG. 5 provides an example in which the starting point is set at the drilling tip section 24. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

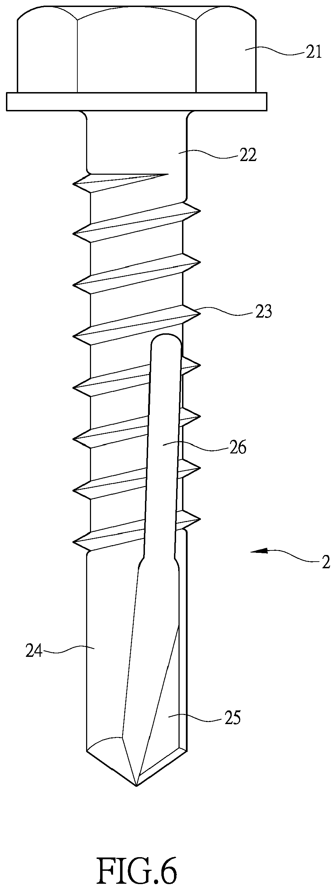

As shown in FIG. 6, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end, and arranged to extend upward from the upper end along the shank 22 in a direction toward the screw head 21 is at least one helical second chip removal groove 26 that is inclined in a direction toward the screw head at an angle between 1° and 90° such that the inclination direction of the second chip removal groove 26 is the same as an angular direction of the thread 23. The second chip removal groove 26 is connected to and in communication with the first chip removal groove 25 of the drilling tip section 24. More specifically, a location of connection and communication between the first chip removal groove 25 and the second chip removal groove 26 can be selected according to the need of a user or a customer and can be set at an upper end, a middle section, or a lower end of the drilling tip section 24. FIG. 6 provides an example in which the connection and communication is made at the upper end. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

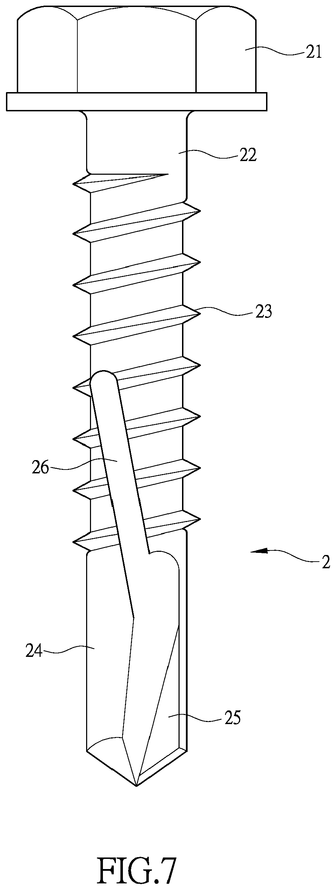

As shown in FIG. 7, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end, and arranged to extend upward from the upper end along the shank 22 in a direction toward the screw head 21 is at least one helical second chip removal groove 26 that is inclined in a direction toward the screw head at an angle between 91° and 179° such that the inclination direction of the second chip removal groove 26 is opposite to an angular direction of the thread 23. The second chip removal groove 26 is connected to and in communication with the first chip removal groove 25 of the drilling tip section 24. More specifically, a location of connection and communication between the first chip removal groove 25 and the second chip removal groove 26 can be selected according to the need of a user or a customer and can be set at an upper end, a middle section, or a lower end of the drilling tip section 24. FIG. 7 provides an example in which the connection and communication is made at the upper end. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

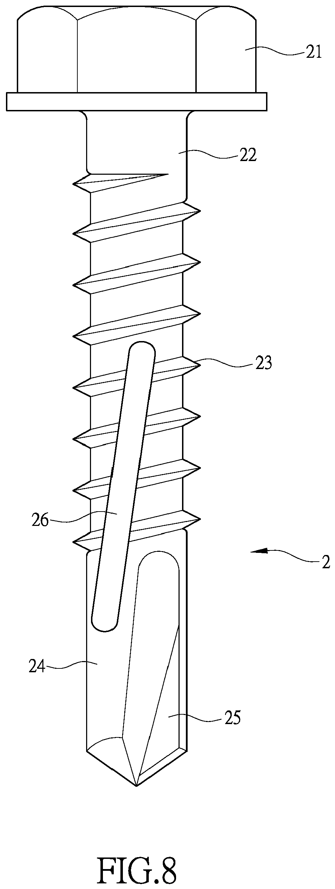

As shown in FIG. 8, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end, and arranged to extend upward from the upper end along the shank 22 in a direction toward the screw head 21 is at least one helical second chip removal groove 26 that is inclined in a direction toward the screw head at an angle between 1° and 90° such that the inclination direction of the second chip removal groove 26 is the same as an angular direction of the thread 23. The second chip removal groove 26 is not connected to the first chip removal groove 25 of the drilling tip section 24. According to the need of customers, the second chip removal groove 26 may be structured to have a starting point that is located in the drilling tip section 24 or the thread 23. FIG. 8 provides an example in which the starting point is set at the drilling tip section 24. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

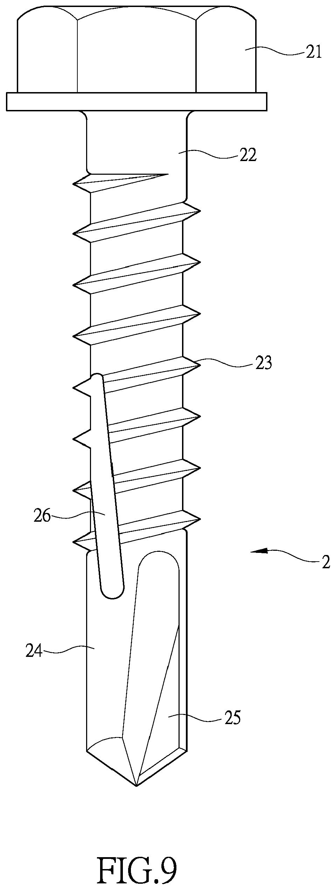

As shown in FIG. 9, the present invention provides a screw 2, which comprises a screw head 21 and a shank 22 extending downward from the screw head 21. The shank 22 has an outer circumferential surface, which is provided with a thread 23 circumferentially extending around the shank. The shank 22 has a lower end forming a drilling tip section 24. The thread 23 is extended into or is not extended into the drilling tip section 24, this being determined according to the needs or uses of a user. The drilling tip section 24 is formed with at least one first chip removal groove 25. The first chip removal groove 25 has an upper end, and arranged to extend upward from the upper end along the shank 22 in a direction toward the screw head 21 is at least one helical second chip removal groove 26 that is inclined in a direction toward the screw head at an angle between 91° and 179° such that the inclination direction of the second chip removal groove 26 is opposite to an angular direction of the thread 23. The second chip removal groove 26 is not connected to the first chip removal groove 25 of the drilling tip section 24. According to the need of customers, the second chip removal groove 26 may be structured to have a starting point that is located in the drilling tip section 24 or the thread 23. FIG. 9 provides an example in which the starting point is set at the drilling tip section 24. Further, the second chip removal groove 26 has a width that demonstrates a relationship with respect to a width of the first chip removal groove 25 of the drilling tip section 24 that is adjustable according to different requirements so as to be made as the same width, a smaller width, or a larger width for the purposes of further improving the performance of chip removal and saving fabrication cost. In this way, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

The efficacy of the present invention is that by arranging at least one second chip removal groove 26 on a shank 22 of a screw 2 with the second chip removal groove 26 being connected to or not connected to a first chip removal groove 25 provided on a drilling tip section 24, the capability of the screw 2 for cutting, tapping, or drilling into a depth and the performance of chip removal thereof can be improved, and also a screw-in torque of the screw 2 can be reduced, to thereby achieve an effect of saving labor and time and thus improve the quality of operation conducted with the screw 2.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the claims of the present invention.

## Claims

1. A structure of a self-drilling screw, the screw (2) comprising a screw head (21) and a shank (22) extending downward from the screw head (21), the shank (22) having an outer circumferential surface, around which a thread (23) is circumferentially formed, the shank (22) having a lower end forming a drilling tip section (24), the thread (23) being extended or not extended into the drilling tip section (24), the drilling tip section (24) being formed with at least one first chip removal groove (25), **characterized in that** the first chip removal groove (25) has an upper end and at least one second chip removal groove (26) is arranged to extend from the upper end along the shank (22) in a direction toward the screw head (21).

2. The structure of the self-drilling screw according to claim 1, wherein the second chip removal groove (26) is of a helical form having a helical direction that is the same as an angular direction of the thread (23).

3. The structure of the self-drilling screw according to claim 1, wherein the second chip removal groove (26) is of a helical form having a helical direction that is opposite to an angular direction of the thread (23).

4. The structure of the self-drilling screw according to claim 1, wherein the second chip removal groove (26) and the first chip removal groove (25) are connected to each other.

5. The structure of the self-drilling screw according to claim 1, wherein the second chip removal groove (26) and the first chip removal groove (25) are not connected to each other.

6. The structure of the self-drilling screw according to claim 1, wherein the second chip removal groove (26) is extended to incline in a direction toward the screw head (21) and an inclination direction of the second chip removal groove (26) is the same as an angular direction of the thread (23) and the second chip removal groove (26) and the first chip removal groove (25) are connected to each other.

7. The structure of the self-drilling screw according to claim 1, wherein the second chip removal groove (26) is extended to incline in a direction toward the screw head (21) and an inclination direction of the second chip removal groove (26) is opposite to an angular direction of the thread (23) and the second chip removal groove (26) and the first chip removal groove (25) are connected to each other.

8. The structure of the self-drilling screw according to claim 6, wherein the second chip removal groove (26) and the first chip removal groove (25) are not connected to each other.

9. The structure of the self-drilling screw according to claim 7, wherein the second chip removal groove (26) and the first chip removal groove (25) are not connected to each other.
